**Europäisches Patentamt**

**European Patent Office**

**Office européen des brevets**

(11) Veröffentlichungsnummer: **0 135 035**

**B1**

(12) ## EUROPÄISCHE PATENTSCHRIFT

(45) Veröffentlichungstag der Patentschrift:
06.04.88

(51) Int. Cl.⁴: **H 04 N 5/243**

(21) Anmeldenummer: **84108540.0**

(22) Anmeldetag: **19.07.84**

(54) **Verfahren und Schaltungsanordnung zur Verbesserung der Qualität eines Fernsehbildes.**

(30) Priorität: **21.07.83 DE 3326272**

(43) Veröffentlichungstag der Anmeldung:
**27.03.85 Patentblatt 85/13**

(45) Bekanntmachung des Hinweises auf die Patenterteilung:
**06.04.88 Patentblatt 88/14**

(84) Benannte Vertragsstaaten:
**AT BE CH DE FR GB IT LI**

(56) Entgegenhaltungen:
**EP-A-0 053 886**
**DE-A-2 003 754**
**DE-A-3 101 806**
**DE-B-2 059 944**
**DE-B-2 447 440**

**SOVIET INVENTIONS ILLUSTRATED, Sektion R, Woche B 24, 25. Juli 1979 DERWENT PUBLICATIONS LTD, London SU-R5**

(73) Patentinhaber: **GRUNDIG E.M.V. Elektro-Mechanische Versuchsanstalt Max Grundig holländ. Stiftung & Co. KG., Kurgartenstrasse 37, D-8510 Fürth (DE)**

(72) Erfinder: **Knörr, Wolfgang, Hohe Strasse 4, D-8501 Rosstal- GWD (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren und eine Schaltungsanordnung zur Verbesserung der Qualität eines bei großen Leuchtdichteunterschieden innerhalb der Objektszene in einigen Bildteilen nicht ausreichend ausgesteuerten Fernsehbildes, wobei das unkorrigierte Videosignal auf einen Hauptweg und einen Zweigweg gegeben wird.

Aus der DE-B2-2 447 440 ist bereits ein Verfahren zur Verbesserung der Bildqualität eines Bildes einer Bildaufnahmeeinrichtung bekannt, bei welchem ein korrigiertes Videosignal dadurch erzeugt wird bzw. durch örtlich ungleichmäßige Beleuchtung hervorgerufene Helligkeitsschwankungen aus dem Bild dadurch eliminiert werden, daß das bei der Vorlagenabtastung erzeugte Videosignal einer ersten Fernsehkamera durch ein zweidimensionales tiefpaßgefiltertes Adaptionssignal einer zweiten Fernsehkamera dividiert wird.

Ein Verfahren und eine Schaltungsanordnung zur Dehnung der Amplitude eines Videosignals in den Schattenpartien ist beispielsweise aus der DE-B2-2 059 944 bekannt, wobei in den Schattenpartien das Frequenzband eingeschränkt wird. Gemäß dieser Auslegeschrift wird das Videosignal einerseits auf einen unteren Teil des Frequenzbandes über einen Tiefpaß beschränkt einem ersten Verstärker und andererseits mit voller Bandbreite einem zweiten Verstärker zugeführt und auf einen, den dunkleren Bildteilen entsprechenden Amplitudenbereich begrenzt, und schließlich die mit voller Bandbreite übertragenen und die bezüglich ihrer Amplitude und ihres Frequenzbereiches begrenzten Signale einer Überblendschaltung zugeführt.

Der Erfindung liegt die Aufgabe zugrunde, ein Verfahren und eine Schaltungsanordnung anzugeben, welche eine Verbesserung der Bildqualität eines bei großen Leuchtdichteunterschieden innerhalb der Objektszene in einigen Bildteilen nicht ausreichend ausgesteuerten Bildes, d.h. eine Verbesserung der Wiedergabe dunkler Bildpartien bei sehr kontrastreichen Objekten ermöglichen, wobei diese Verbesserung ohne gronen Gleichrichtung, o.ä., erzielt werden soll.

Diese Aufgabe wird durch die in den Ansprüchen 1 bzw. 3 angegebenen Merkmale gelöst.

Vorteilhafte Weiterbildungen des erfindungsgemäßen Verfahrens bzw. der erfindungsgemäßen Schaltungsanordnung ergeben sich aus den Unteransprüchen 2 bzw. 4 bis 9.

Mit der Erfindung wird auf einfache Art und Weise, insbesondere ohne großen bauteilemäßigen Schaltungsaufwand, und ohne jegliche Filterung, Gleichrichtung, o.ä. eine höhere Verstärkung der dunklen Bildpartien und demzufolge eine Verbesserung der Bildqualität bei gronen Leuchtdichteunterschieden des Objektes erreicht.

Die Erfindung wird im folgenden unter Bezugnahme auf die Zeichnungsfiguren beispielsweise näher erläutert. Es zeigen:

Fig. 1 ein Blockschaltbild einer erfindungsgemäßen Schaltungsanordnung zur Erläuterung des erfindungsgemäßen Verfahrens, und

Fig. 2 Signaldiagramme der in Fig. 1 an entsprechend gekennzeichneten Stellen auftretenden Signale.

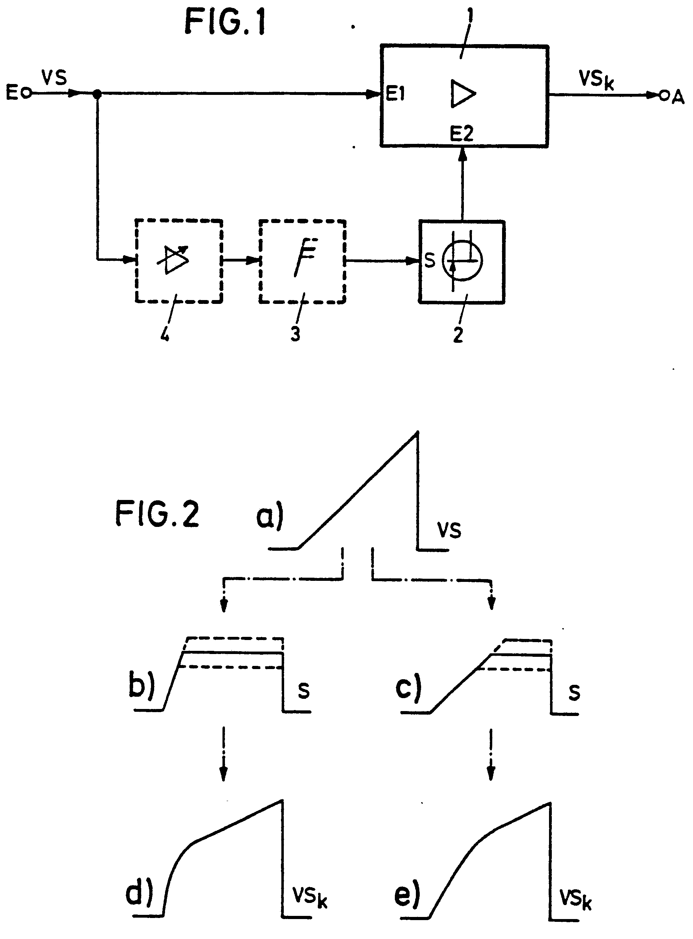

Gemäß Figur 1 wird das an einer Eingangsklemme E anliegende unkorrigierte Videosignal VS einem ersten Eingang E1 einer Verstärkungseinrichtung 1 und zugleich einem Steuereingang S eines Steuergliedes 2 zugeführt. Das Steuerglied 2, das durch einen veränderbaren Widerstand - beispielsweise einen Feldeffekttransistor - gebildet ist, ist ausgangsseitig mit einem als Steuereingang im Sinne einer Verstärkungsregelung vorgesehenen zweiten Eingang E2 der Verstärkungseinrichtung 1 verbunden und verändert seine Wirkung auf diesen Steuereingang E2 in Abhängigkeit vom jeweiligen Pegel des an der Eingangsklemme E und damit an der Steuerklemme S anliegenden, unkorrigierten Videosignals VS derart, daß die Verstärkungseinrichtung 1 bei den dunkelsten Stellen des Videosignals VS die größte Verstärkung aufweist. Die Regelzeitkonstante wird dabei sehr kurz, gegebenenfalls in der Größenordnung der Dauer eines Bildpunktes gewählt. An der Ausgangsklemme A der Verstärkungseinrichtung 1 ist das korrigierte Videosignal $VS_k$ abgreifbar.

Für eine Wahlmöglichkeit, wie stark die einzelnen Graustufen des Videosignals VS angehoben werden sollen, ist gemäß einer weiteren Ausbildung der Erfindung in Figur 1 zwischen die Eingangsklemme E und das Steuerglied 2 ein weiteres, in seiner Verstärkung veränderbares, lineares Verstärkungsglied 4 geschaltet.

Vorteilhafterweise wird die Korrektur des Videosignales VS nur für die unteren Grauwerte durchgeführt. Deshalb ist gemäß einer weiteren Ausbildung der Erfindung In Figur 1 zwischen die Eingangsklemme E und das Steuerglied 2 eine variierbare Abschneidestufe 3 geschaltet.

Für die Verstärkungseinrichtung 1 der Figur 1 kann ein Operationsverstärker vorgesehen sein, der beispielsweise in seiner Verstärkung veränderbar ist.

Die in Figur 2 gezeigten Signaldiagramme stellen die jeweils auftretenden Signale an den in Figur 1 in gleicher Weise gekennzeichneten Stellen dar; d. h. am Eingang E1, an der Ausgangsklemme A bzw. am Steuereingang S. Dabei bedeuten die im Signal am Steuereingang S eingezeichneten gestrichelten Linien eine veränderbare Abschneideschwelle.

Gemäß Figur 2 werden die veränderbere Verstärkung des Steuersignals durch die zusätzliche Verstärkungseinrichtung 4 und deren Wirkung auf die Gesamtschaltung angedeutet

sowie die übrigen, gemäß Figur 1 auftretenden und dort entsprechend gekennzeichneten Signale dargestellt.

Demnach zeigt Figur 2a das unkorrigierte Videosignal VS an der Eingangsklemme E. Die Figuren 2b und 2c stellen das Steuersignal am Steuereingang S mit hoher bzw. geringer Verstärkung durch die zusätzliche Verstärkungseinrichtung 4 dar, wobei die Abschneideschwelle der Abschneidestufe 3 in beiden Fällen auf gleichem Niveau liegt. Figur 2d zeigt das korrigierte Videosignal $VS_k$ an der Ausgangsklemme A mit dem Signal nach Figur 2b am Steuereingang S, während Figur 2e das korrigierte Videosignal $VS_k$ an der Ausgangsklemme A mit dem Signal nach Figur 2c am Steuereingang S zeigt.

Wie bereits beschrieben, kann die Verstärkungsänderung der Verstärkungseinrichtung 1 sowohl linear, als auch nicht-linear von der Beeinflussung durch das Steuerglied 2 abhängig sein. In Figur 2 wird von einem nicht-linearen Zusammenhang ausgegangen.

**Patentansprüche**

1. Verfahren zur Verbesserung der Qualität eines bei großen Leuchtdichteunterschieden innerhalb der Objektszene in einigen Bildteilen nicht ausreichend ausgesteuerten Fernsehbildes, wobei das unkorrigierte Videosignal auf einen Hauptweg und einen Zweigweg gegeben wird, dadurch gekennzeichnet,
- daß das in der Bildaufnahmeeinrichtung erzeugte Videosignal im Hauptweg über eine regelbare Verstärkungseinrichtung (1) geleitet und partiell derart verstärkt wird, daß die am wenigsten ausgesteuerten Bildanteile die höchste Verstärkung erfahren,
- daß im Zweigweg eine Regelspannung gewonnen wird, die dem jeweiligen Pegel des zu korrigierenden Videosignals angepaßt wird,
- daß die aus den Eigenschaften der Regelspannungserzeugungseinrichtung (2) und der regelbaren Verstärkungseinrichtung (1) sich ergebende Regelzeitkonstante in der Größenordnung der Dauer eines Bildpunktes gewählt wird und
- daß die partielle Verstärkungsänderung einstellbar unterhalb einer bestimmten Schwelle des Videosignals wirksam wird.

2. Verfahren nach Anspruch 1, dadurch gekennzeichnet, daß die Verstärkungsänderung nach Maßgabe der Steuergröße linear oder nicht-linear erfolgt.

3. Schaltungsanordnung zur Verbesserung der Qualität eines bei großen Leuchtdichteunterschieden innerhalb der Objektszene in einigen Bildteilen nicht ausreichend ausgesteuerten Fernsehbildes, wobei das unkorrigierte Videosignal auf einen Hauptweg und einen Zweigweg gegeben wird, dadurch gekennzeichnet, daß das an einer Eingangsklemme (E) anliegende unkorrigierte Videosignal (VS)
- im Hauptweg einer regelbaren Verstärkungseinrichtung (1) zugeführt und dort partiell derart verstärkt wird, daß die am wenigsten ausgesteuerten Bildanteile die höchste Verstärkung erfahren, und
- im Zweigweg über eine veränderbare lineare Verstärkungseinrichtung (4), eine Abschneidestufe (3) und ein Steuerglied (2) zur Erzeugung der Regelspannung für die regelbare Verstärkungseinrichtung (1) geleitet wird, wobei
- die Regelspannung dem jeweiligen Pegel des zu korrigierenden Videosignals angepaßt ist und dem Steuereingang (E2) der regelbaren Verstärkungseinrichtung (1) zugeführt wird,
- das Steuerglied (2) und die regelbare Verstärkungseinrichtung (1) derart dimensioniert sind, daß die sich ergebende Regelzeitkonstante in der Größenordnung der Dauer eines Bildpunktes liegt,
- und wobei der Abschneidepegel der Abschneidestufe (3) derart einstellbar ist, daß die partielle Verstärkungsänderung erst unterhalb einer bestimmten Schwelle des Videosignals wirksam wird, und daß an der Ausgangsklemme (A) der regelbaren Verstärkungseinrichtung (1) das korrigierte Videosignal $(VS_k)$ abgreifbar ist.

4. Schaltungsanordnung nach Anspruch 3, dadurch gekennzeichnet, daß für die Verstärkungseinrichtung (1) ein Operationsverstärker vorgesehen ist.

5. Schaltungsanordnung nach Anspruch 4, dadurch gekennzeichnet, daß der Operationsverstärker in seinem Verstärkungsgrad veränderbar ist.

6. Schaltungsanordnung nach einem der Ansprüche 3 bis 5, dadurch gekennzeichnet, daß das Steuerglied (2) durch einen veränderbaren Widerstand gebildet ist.

7. Schaltungsanordnung nach Anspruch 6, dadurch gekennzeichnet, daß die Verstärkungsänderung der Verstärkungseinrichtung (1) linear von der Beeinflussung durch das Steuerglied (2) abhängt.

8. Schaltungsanordnung nach Anspruch 6, dadurch gekennzeichnet, daß die Verstärkungsänderung der Verstärkungseinrichtung (1) nicht-linear von der Beeinflussung durch das Steuerglied (2) abhängt.

9. Schaltungsanordnung nach Anspruch 6, dadurch gekennzeichnet, daß der veränderbare Widerstand durch einen Feldeffekttransistor gebildet ist.

**Claims**

1. Method for improving the quality of a television picture having an inadequate contrast range in some parts of the picture with large differences in luminance within the object scene, the uncorrected video signal being applied to a main path and a branch path, characterized in that:

- the video signal generated in the image pickup device is conducted in the main path via a controllable amplifying device (1) and is partially amplified in such a manner that the picture components having the least contrast range are subjected to the greatest amplification,

- a control voltage is obtained in the branch path which is adapted to the respective level of the video signal to be corrected,

- the control time constant resulting from the characteristics of the control voltage generating device (2) and of the controllable amplifying device (1) is selected in the order of magnitude of the duration of one picture element and

- the partial change in amplification becomes adjustably effective below a certain threshold of the video signal.

2. Method according to Claim 1, characterized in that the change in amplification is linear or non-linear as determined by the controlling variable.

3. Circuit arrangement for improving the quality of a television picture having an inadequate contrast range in some parts of the picture with large differences in luminance within the object scene, the uncorrected video signal being applied to a main path and a branc nath characterized in that the uncorrected video signal (VS) present at an input terminal (E),

- is supplied to a controllable amplifying device (1) in the main path, where it is partially amplified in such a manner that the picture components having the least contrast range are subjected to the greatest amplification, and

- is conducted, in the branch path, via a variable linear amplifying device (4), a clipping stage (3) and a control section (2) for generating the control voltage for the control amplifying device (1), in which arrangement,

- the control voltage is adapted to the respective level of the video signal to be corrected and is supplied to the control input (E2) of the controllable amplifying device (1),

- the control section (2) and the controllable amplifying device (1) are dimensioned in such a manner that the resultant control time constant is of the order of magnitude of the duration of one picture element,

- and the clipping level of the clipping stage (3) can be 20 adjusted in such a manner that the partial change in gain becomes effective only below a particular threshold of the video signal, and

that the corrected video signal (VS$_k$) can be picked up at the output terminal (A) of the controllable amplifying device (1).

4. Circuit arrangement according to Claim 3, characterized in that an operational amplifier is provided for the amplifying device (1).

5. Circuit arrangement according to Claim 4, characterized in that the gain of the operational amplifier can be varied.

6. Circuit arrangement according to one of Claims 3 to 5, characterized in that the control section (2) is formed by a variable resistor.

7. Circuit arrangement according to Claim 6, characterized in that the change in amplification of the amplifying device (1) is linearly dependent on the influence of the control section (2).

8. Circuit arrangement according to Claim 6, characterized in that the change in amplification of the amplification device is non-linearly dependent on the influence of the control section (2).

9. Circuit arrangement according to Claim 6, characterized in that the variable resistor is formed by a field effect transistor.

## Revendications

1. Procédé pour améliorer la qualité d'une image de télévision non modulée de façon suffisante dans quelques- unes de ses parties, dans le cas de différenses importantes de luminance à l'intérieur de la scène objet, le signal vidéo non corrigé étant envoyé à une voie principale et à une voie de dérivation, caractérisé en ce

- que le signal vidéo produit dans le dispositif d'enregistrement d'images est transmis dans la voie principale par l'intermédiaire d'un dispositif amplificateur réglable (1) et est amplifié partiellement de telle sorte que les parties de l'image, qui sont les moins modulées, subissent l'amplification maximale,

- qu'une tension de réglage, qui est adaptée au niveau respectif du signal vidéo à corriger, est récupérée dans la voie de dérivation,

- que pour la constante de temps de réglage, qui est obtenue à partir des caractéristiques du dispositif (2) de production de la tension de réglage et du dispositif amplificateur réglable (1) on choisit une valeur de l'ordre de grandeur de la durée d'un point image, et

- que la modification partielle de l'amplification agit, d'une manière réglable, au-dessous d'un seuil déterminé du signal vidéo.

2. Procédé selon la revendication 1, caractérisé en ce que la mdification de l'amplification s'effectue d'une manière linéaire ou non linéaire en fonction de la grandeur de commande.

3. Montage pour améliorer la qualité d'une image de télévision non modulée de façon suffisante dans quelques- unes de ses parties, dans le cas de différences importantes de luminance à l'intérieur de la scène objet, le signal vidéo non corrigé étant envoyé à une voie principale et à une voie de dérivation, caractérisé en ce que le signal vidéo non corrigé (VS), qui est présent sur une borne d'entrée (E), est envoyé, dans la voie principale, à un dispositif amplificateur réglable (1) et y est amplifié partiellement de telle sorte que les parties de l'image, qui sont les moins modulées, sont soumises à l'amplification maximale, et

est transmis, dans la voie de dérivation, par l'intermédiaire d'un dispositif amplificateur linéaire variable (4), d'un circuit écrêteur (3) et d'un circuit de commande (2) pour la production de la tension de réglage pour le dispositif amplificateur réglable (1),

auquel cas:

- la tension de réglage est adaptée au niveau respectif du signal vidéo devant être corrigé et est envoyée à une entrée de commande (E2) du dispositif amplificateur réglable (1),

- le circuit de commande (2) et le dispositif amplificateur réglable (1) sont dimensionnés de telle sorte que la constante de temps de réglage obtenue est de l'ordre de grandeur de la durée d'un point image, et

- le niveau d'écrêtage de l'étage écrêteur (3) est réglable de telle sorte que la modification partielle de l'amplification n'est active qu'au-dessous d'un seuil déterminé du signal vidéo, et

que le signal vidéo corrigé ($VS_k$) peut être prélevé sur la borne de sortie (A) du dispositif amplificateur réglable (1).

4. Montage selon la revendication 3, caractérisé en ce qu'il est prévu un amplificateur opérationnel pour le dispositif amplificateur (1).

5. Montage selon la revendication 4, caractérisé en ce que le degré d'amplification de l'amplificateur opérationnel est modifiable.

6. Montage selon l'une des revendications 3 à 5, caractérisé en se que le circuit de commande (2) est formé par une résistance variable.

7. Montage selon la revendication 6, caractérisé en ce que la modification de l'amplification du dispositif amplificateur (1) dépend linéairement de l'influence exercée par le circuit de commande (2).

8. Montage selon la revendication 6, caractérisé en ce que la modification de l'amplification du dispositif amplificateur (1) dépend d'une manière non linéaire de l'influence exercée par le circuit de commande (2).

9. Montage selon la revendication 6, caractérisé en ce que la résistance variable est formée par un transistor à effet de champ.

0 135 035

FIG.1

FIG.2